# EUROPÄISCHE PATENTSCHRIFT

(11) **EP 1 489 227 B1**
(45) Veröffentlichungstag und Bekanntmachung des Hinweises auf die Patenterteilung: **18.07.2007**
(21) Anmeldenummer: 04011140.3
(22) Anmeldetag: 11.05.2004
(51) Int. Cl.: D21F 1/70, B03D 1/24

(54) **Verfahren und Vorrichtung zur Flotation von Störstoffen aus einer wässrigen Faserstoffsuspension**
Process and apparatus for removing contaminants by flotation from an aqueous fibrous suspension
Procédé et dispositif de flottation pour éliminer des contaminants d' une suspension aqueuse de fibres

(30) Priorität: 20.06.2003 DE 10327701
(43) Veröffentlichungstag der Anmeldung: 22.12.2004
(73) Patentinhaber: Voith Patent GmbH, 89522 Heidenheim (DE)
(72) Erfinder: Britz, Herbert, 88250 Weingarten (DE); Dreyer, Axel, 88212 Ravensburg (DE); Hess, Harald, 88287 Grünkraut (DE); Kemper, Martin, 88250 Weingarten (DE); Möller, Dietrich, 88371 Ebersbach (DE); Selbherr, Anton, 78315 Radolfzell (DE)

(56) Entgegenhaltungen:
- EP-A- 1 029 975
- GB-A- 460 761
- US-A- 5 282 538
- US-B1- 6 413 366

## Beschreibung

Die Erfindung betrifft ein Verfahren zur Flotation von Störstoffen aus einer wässrigen Faserstoffsuspension gemäß dem Oberbegriff des Anspruchs 1.

Verfahren der genannten Art werden verwendet, um aus einer wässrigen Faserstoffsuspension zumindest einen Teil der darin suspendierten Störstoffteilchen auszuscheiden. Bekanntlich wird bei einer Flotation ein die auszuscheidenden Stoffe enthaltender Schaum oder Schwimmschlamm gebildet. Ein typischer Anwendungsfall eines derartigen Verfahrens ist die Aufbereitung von einer aus bedrucktem Altpapier gewonnenen wässrigen Faserstoffsuspension, in der die Druckfarbenpartikel bereits von Fasern abgelöst sind, so dass sie sich ausflotieren lassen. Der hier beschriebene Flotationsvorgang nutzt die Unterschiede zwischen Faserstoff und unerwünschten Feststoffteilchen in der Art, dass der Faserstoff auf Grund seiner Hydrophilie in der Faserstoffsuspension verbleibt, während die angesprochenen Feststoffteilchen hydrophob sind und deshalb zusammen mit den Luftblasen in den Schaum gelangen. Neben den Druckfarbenpartikeln gibt es auch eine Vielzahl weiterer Stoffe, die hydrophob sind und sich daher durch Flotation von dem Faserstoff trennen lassen. Solche Stoffe sind insbesondere Kleber, feine Kunststoffpartikel und eventuell auch Harze. Wenn durch das Flotationsverfahren Fasern von Verunreinigungen getrennt, also nicht alle Feststoffpartikel aussortiert werden sollen, spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Faserstoffsuspensionen verwendet.

Der Stand der Technik bezüglich Flotationsverfahren für Faserstoffsuspensionen ist bereits sehr weit fortgeschritten. Daher gibt es Lösungen, welche durchaus geeignet sind, einen großen Teil der Feststoffpartikel durch Flotatiön zu entfernen. Da Flotationsanlagen relativ aufwändig in der Beschaffung und im Betrieb sind, ist es ein verständliches Ziel, deren Effekt zu verbessern oder den notwendigen Aufwand für das Erreichen desselben Ergebnisses zu reduzieren.

Im Zuge der laufenden Entwicklung von Verfahren und Apparaten zur Flotation von Faserstoffsuspensionen ist insbesondere die Führung von Suspension und Luftblasen im Flotatiorisbehälter variiert worden. Ein wichtiges Strömungsprinzip ist dabei die Gegenstromführung, d.h. durch hydraulische Maßnahmen wird die Faserstoffsuspension im Wesentlichen entgegen der Strömungsrichtung der gegen das Schwerefeld aufsteigenden Luftblasen geführt. Im weitaus häufigsten Fall, bei dem die treibende Kraft der Flotation die Erdgravitation ist, bedeutet das also: Die Luftblasen steigen nach oben, und die Faserstoffsuspension wird abwärts geführt. D.h., dass die "schmutzigste" Suspension mit den bereits sehr stark beladenen Luftblasen in Kontakt kommt und auf dem Weg nach unten ständig sauberer wird, wobei auch die dann angetroffenen Luftblasen weniger Schmutzfracht tragen. Bei diesem Gegenstromprinzip ist es wichtig, dass die Geschwindigkeiten optimal aufeinander abgestimmt werden, um eine möglichst gute Flotationswirkung zu erhalten.

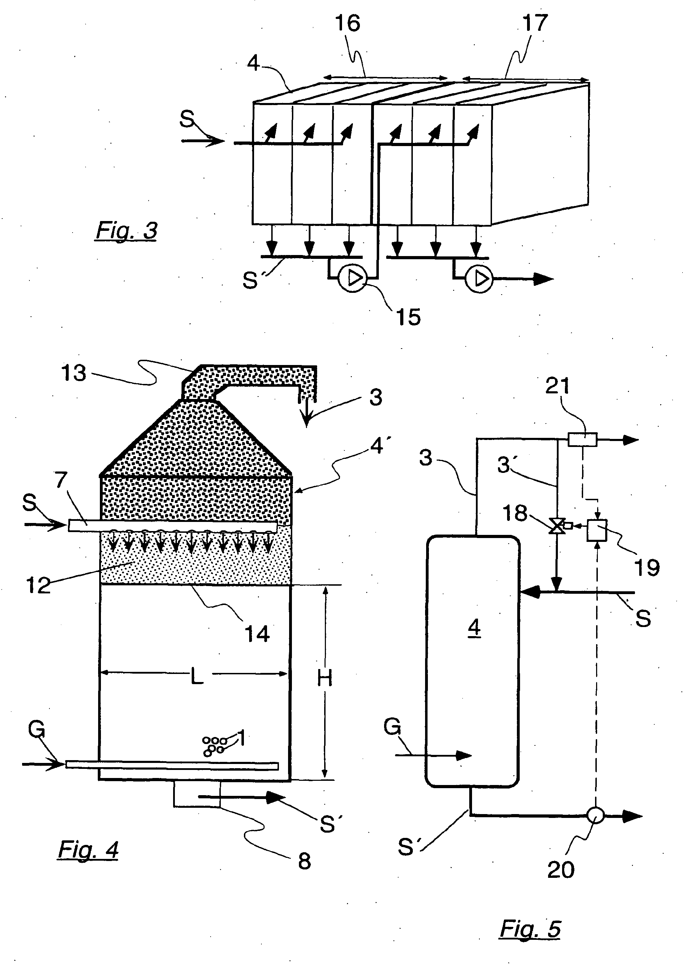

Ein einfaches Beispiel für die Gegenstromflotation ist in Abbildung 4 des Fachaufsatzes "Neue Systembausteine zur Aufbereitung von Altpapier: Entwicklung und Betriebserfahrungen", J. Kleuser und T.H. Egenes, Wochenblatt für Papierfabrikation 14/15, 1996, dargestellt. Dort findet der Stoffzulauf im oberen Drittel eines runden Flotationsapparates statt, während die Begasung im unteren Teil unmittelbar über dem unten liegenden Gutstoffabzug erfolgt. Der Schaum wird im obersten Teil der Flotationssäule gesammelt und abgeführt. Eine andere Möglichkeit ist z.B. aus der DE 198 23 053 bekannt. Dabei erfolgt die Zugabe der Faserstoffsuspension in den bereits gebildeten Schaum. Auch hier werden Luftblasen und Suspension im Gegenstrom geführt.

Verfahren dieser Art werden bereits in weitem Umfang industriell angewendet. D.h. bei der zur Papiererzeugung notwendigen Stoffaufbereitung werden Anlagen betrieben, die dieses Verfahren verwenden und große Produktionsmengen zu verarbeiten haben. Der erwartete und heute auch mögliche optimale Effekt solcher Verfahren hängt entscheidend von den Strömungsgeschwindigkeiten ab, die sich in den verwendeten Flotationsgefäßen einstellen. Infolge dessen ist bei Neuanlagen eine Anpassung von Behältervolumina, Querschnitten, Rohrleitungen etc. an die gewünschte Produktionsmenge erforderlich. Wenn diese Anpassung ohne technologische Nachteile gelingt, ist zwar der Effekt gesichert, es entstehen aber größere Kosten durch ständige Neukonstruktionen und Änderungen in der Fertigung solcher Vorrichtungen.

Der Erfindung liegt die Aufgabe zu Grunde, Flotationsverfahren dieser Art weiter zu verbessern. Reinigungsergebnis und/oder die Ausbeute des Verfahrens sollen auch bei unterschiedlichen Produktionsmengen möglichst leicht optimiert werden können.

Diese Aufgabe wird durch die Merkmale des Anspruchs 1 in vollem Umfang gelöst.

Durch die beschriebenen Merkmale ist es möglich, eine gleichmäßige Strömung im Flotationsgefäß zu erzeugen, da auf Grund des gewählten Längen/Breitenverhältnisses störende Turbulenzen weitgehend vermieden werden, sich also die Gegenströmung von Suspension und Blasenstrom in optimaler Weise ausbilden kann. Darüber hinaus bietet sich noch der Vorteil, dass sich die gesamte Flotationsanlage leicht aus Modulen aufbauen lässt, womit die einzelnen Flotationsgefäße gemeint sind. Diese Module werden in einfacher Weise an ihren Längsseiten zusammen montiert. Bei dieser Ausgestaltung des Verfahrens werden diejenigen Module, mit denen ein Flotationsschritt (z.B. Primär- oder Sekundärflotation) durchgeführt werden soll, parallel betrieben. Bei größeren Durchsätzen in einer Stufe werden entsprechend mehr, bzw. bei kleineren entsprechend weniger Module verwendet. Neue aufwändige Optirhieruhgsversuche sind dann nicht mehr erforderlich.

Das erfindungsgemäße Verfahren kann angewendet werden auf alle im Oberbegriff beschriebenen Formen. Dabei kann die zu flotierende Faserstoffsuspension z.B. direkt in die sich im Flotationsgefäß befindende Flüssigkeit zugegeben werden oder oberhalb dieser in den Schaumbereich, also gemäß der bereits erwähnten DE 198 23 053. Da bei Verfahren der letztgenannten Art die Faserstoffsuspension in den aufsteigenden Schaum zugegeben wird, trifft sie auf einen bereits gebildeten Luftblasenverbund mit sich dazwischen befindenden Flüssigkeitskanälen. Auf diese Weise wird das Gegenstromprinzip besonders günstig realisiert.

Die Erfindung und ihre Vorteile werden erläutert an Hand von Zeichnungen. Dabei zeigen:
- Fig. 1: schematisch: Durchführung des Verfahrens;
- Fig. 2: Blick auf eine für das Verfahren geeignete Flotationsanlage;
- Fig. 3: ein Schaltungsbeispiel von zwei Modulgruppen;
- Fig. 4: eine Variante desVerfahrens;
- Fig. 5: eine Ausführung des Verfahrens mit Schaumrezirkulation.

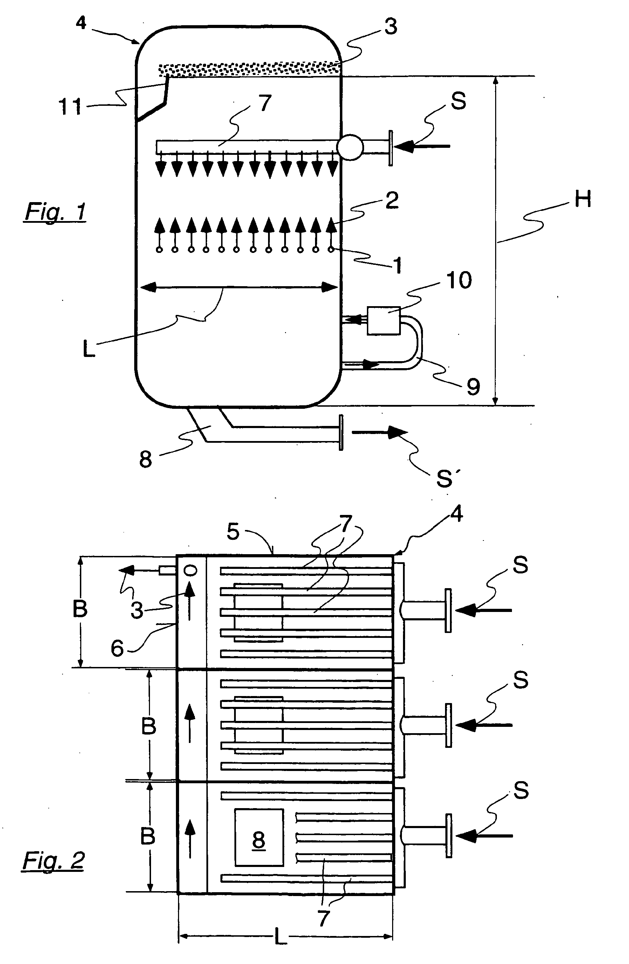

Das in der Fig. 1 gezeigte Flotationsgefäß 4 ist in geschnittener Seitenansicht dargestellt. Die Faserstoffsuspension S wird durch relativ weit oben liegende Verteilrohre 7 hier in die sich im Flotationsgefäß 4 bereits befindende Faserstoffsuspension zugegeben. Nur sporadisch gezeichnete Gasblasen 1 bilden einen Blasenstrom 2. Die zugegebene Faserstoffsuspension S wird nun gegen die Steigrichtung des Blasenstromes 2 durch diesen hindurchgeführt und in gereinigter Form als Gutstoff S' durch den Gutstoffauslass 8 aus dem Flotationsgefäß 4 ausgeleitet. Dabei bleibt der Strömungsquerschnitt im Wesentlichen gleich. Die enthaltenen Störstoffe werden in an sich bekannter Weise an die Gasblasen 1 angelagert und in einem verdichteten Flotationsschaum 3, der einen volumetrischen Gasgehalt von mindestens 74 % hat, nach oben abgeführt. Der Schaum wird im Flotationsgefäß 4 an einer Schaumrinne 11 angestaut, welche im Allgemeinen ein einstellbares Überlaufwehr aufweist. Die Suspension im Flotationsgefäß 4 unterhalb des Flotationsschaumes 3 hat die Stauhöhe H. Die Begasung der Suspension wird bei dem hier gezeigten Beispiel durch einen Begasuhgskreislauf 9 durchgeführt, dessen Funktion darin besteht, einen Teil der Faserstoffsuspension abzuziehen, in einem Begasungselement 10 mit Gas zu vermischen und dann an etwas tieferer Stelle (es könnte auch eine höhere Stelle sein) in das Flotationsgefäß 4 wieder zurück zu pumpen. Aus der Fig. 2, welche insgesamt drei Flotationsgefäße 4 geschnitten und in Ansicht von oben schematisch darstellt, erkennt man die Längsseite 5 mit Länge L und die Breitseite 6 mit Breite B. Das Verhältnis der Länge zur Breite ist bei der Durchführung der Erfindung von entscheidender Bedeutung. Es sollte mindestens 1,5 betragen, wobei besonders gute Flotationsergebnisse bei einem Verhältnis von mehr als mindestens 3 erzielbar sind. Die Vielzahl von Verteilrohren 7 dient dazu, die ankommende Faserstoffsuspension S gleichmäßig auf den Strömungsquerschnitt zu verteilen. Sie sind vorzugsweise mit Löchern versehen, können aber auch durch andere Verteilsysteme ersetzt werden.

Bekanntlich lässt sich bei vorgegebener Strömungsquerschnittsfläche durch Variation des Länge-/Breiteverhältnisses der hydraulische Durchmesser variieren. Der hydraulische Durchmesser rechnet sich nach der Formel: Vierfache Querschnittsfläche geteilt durch den benetzten Umfang. Er ist bei kreisrunden Querschnitten am größten und kann durch die in den Ansprüchen beschriebenen Maßnahmen wesentlich verkleinert werden. Dadurch wird die Suspensionsströmung im Flotationsgefäß beruhigt und die Wirksamkeit des Verfahrens verbessert. Am Beispiel einer Strömungsquerschnittsfläche von 4 m² beträgt beim - bisher üblichen - Kreisquerschnitt der hydraulische Durchmesser ca. 2,3 m. Wird dagegen ein Rechteck mit L = 4 m und B=1 m gewählt, liegt er bei 1,6 m. Wählt man aus ökonomischen Gründen eine größere Strömungsquerschnittsfläche von 8 m², so ist der hydraulische Durchmesser beim Kreis 3,19 m und beim Rechteck mit L = 4 m und B = 2 m nur 2,67 m.

In vielen Fällen lässt sich ein weiterer Vorteil realisieren, da durch die Ausgestaltung des Strömungsquerschnittes nicht nur die hydraulischen Verhältnisse im Flotationsgefäß 4 entscheidend verbessert werden, sondern dass sich. auch eine einfache Möglichkeit zum modularen Aufbau der ganzen Flotationsanlage ergibt. Infolge der vollständig oder zumindest größtenteils geraden seitlichen Begrenzung der Flotationszelle können Module nebeneinander montiert werden, indem sie sich an den Längsseiten berühren. Die gelegentlich bei eckigen Behältern auftretenden Probleme des Ausbeulens treten dann an den Berührungsflächen nicht auf. Die Wände müssen zwischen den Modulen nicht unbedingt durchgehend sein, sie können auch Öffnungen aufweisen, z.B. im Bodenbereich des Flotationsgefäßes 4. Sie können auch ganz fehlen, wenn sich ohne sie in den Modulen eine gleichmäßige Strömung ausbildet.

Eine mögliche Mischung von Parallel- und Serienschaltungen zeigt die Fig. 3 in schematischer Form. Gemäß diesem Beispiel werden jeweils drei Module von Flotationsgefäßen parallel betrieben, d.h. dass in der ersten Gruppe 16 drei Flotationszellen mit der gleichen Faserstoffsuspension S versorgt werden. Der durch Flotation gebildete Gutstoff S' dieser drei Module wird zusammengefasst und über eine Pumpe 15 der zweiten Gruppe 17 von wiederum drei Modulen zugeführt. Dabei kann die Pumpe 15 auch zur erneuten Begasung des Gutstoffs S' benutzt werden. Auch bei solchen Anlagen wirken sich die Vorteile der Erfindung aus. Dabei ist das in Fig. 3 gezeigte Verfahren nur als Beispiel zu verstehen. Es wäre auch möglich, bei zweistufiger Fahrweise, bei der also der Rejekt (Schaum) der ersten Stufe in den Zulauf der zweiten Stufe geführt wird, eine einzige aus Modulen zusammengesetzte Anlage zu verwenden.

Wie bereits erwähnt und in Fig. 4 dargestellt, ist es auch möglich, die Faserstoffsuspension S direkt in den aufsteigenden Schaum 12 zuzugeben. Dadurch wird der direkt unterhalb der Verteilrohre 7 liegende Schaum 12 sehr stark mit Suspension durchsetzt, was zu einer Veränderung der Schaumblasen führt. Wegen der Flüssigkeitszufuhr sind in diesem Bereich die Gasblasen kugelförmig. Oberhalb der Verteilrohre 7 ist der Gasgehalt höher als 74 %, und die Schaumblasen haben Polyederform. Unterhalb des Schaumes 12 bildet sich eine Grenzfläche 14, an der die Stauhöhe H definiert wird. Unterhalb der Grenzfläche 14 ist der Gasgehalt kleiner als 50 %. Statt einer Grenzfläche kann sich auch ein Übergangsbereich ausbilden. Bei dem hier gezeigten Beispiel wird das zur Bildung der Gasblasen 1 erforderliche Gas G direkt in die Suspension eingeblasen. Diese Methode ist selbstverständlich auch bei den anderen gezeigten Flotationseinrichtungen möglich. Der eingedickte Schaum 3 wird auf Grund eines anliegenden Überdruckes über ein Steigrohr 13 aus dem Flotationsgefäß 4' nach oben-herausgedrückt.

In vielen Fällen wird das Verfahren so durchgeführt, dass in einer Stufe nur ein einziger Durchlauf durch ein Flotationsgefäß erfolgt. Mehrere Flotationsgefäße einer Flotationsstufe sind dann nicht in Reihe, sondern parallel geschaltet, so dass der anfallende Flotationsschaum 3 praktisch überall die gleiche Qualität hat. Mit Vorteil kann ein Teilstrom 3' dieses Schaumes in den Zulauf zum Flotationsgefäß 4 rezirkuliert werden, was in der Fig. 5 schematisch (Seitenansicht) dargestellt ist. Dabei dickt sich der nicht rezirkulierte Flotationsschaum ein, was die Rejekt-Aufbereitung und - Deponie wesentlich erleichtert. Die Menge des rezirkulierten Teilstromes 3' kann zur Optimierung des Verfahrens so eingestellt werden, dass bei der geforderten Qualität der Stoffverlust minimal ist. Dazu wird hier das Signal (z.B. der Weißgrad) eines Qualitätssensors 20 im abfließenden Gutstoff S' an einen Regler 19 übermittelt, der über ein Stellventil 18 den Teilstrom 3' verändert. Eine Alternative dazu ist die Regelung der Schaummenge mit Hilfe eines Durchflussmessers 21, kombiniert mit Konsistenzmessung des Schaumes, bei der wiederum das Stellventil 18 angesteuert wird.

## Patentansprüche

1. Verfahren zur Entfernung von Störstoffen aus einer wässrigen Faserstoffsusperisiön (S) unter Verwendung eines aufrecht stehenden Flotationsgefäßes (4, 4'), in dem die Faserstoffsuspension (S) in einer Stauhöhe (H) über dem Boden des Flotationsgefäßes (4) aufgestaut wird,
bei dem mit Hilfe von Gasblasen (1) ein in der aufgestauten Faserstoffsuspension (S) gegen das Schwerefeld aufsteigender Blasenstrom (2) gebildet wird,
wobei die Faserstoffsuspension (S) gegen die Steigrichtung des Blasenstromes(2) durch diesen hindurchgeführt und in gereinigter Form als Gutstoff(S') abgeführt wird, und
wobei die Störstoffe an die Gasblasen (1) angelagert und danach zusammen mit den Gasblasen (1) in einem verdichteten Flotationsschaum (3) abgeführt werden,
**dadurch gekennzeichnet,**
**dass** der quer zum Blasenstrom (2) liegende Strömungsquerschnitt des Flotationsgefäßes (4, 4') an mindestens einer Längsseite (5) zu mindestens 80 % geradlinig ist und dass die Länge (L) der Längsseite (5) mindestens 1,5 Mal, vorzugsweise mindestens 2 Mal, so groß wie die Breite (B) der Breitseite (6) ist.

2. Verfahren nach Anspruch 1,
**dadurch gekennzeichnet,**
**dass** die Länge (L) mindestens 3 Mal so groß ist wie die Breite (B).

3. Verfahren nach Anspruch 1 oder 2,
**dadurch gekennzeichnet,**
**dass** der Strömungsquerschnitt im Wesentlichen rechteckig ist.

4. Verfahren nach Anspruch 1, 2 oder 3,
**dadurch gekennzeichnet,**
**dass** der hydraulische Durchmesser des Strömungsquerschnittes nicht größer ist als 2,7 m.

5. Verfahren nach Anspruch 1, 2, 3 oder4,
**dadurch gekennzeichnet,**
**dass** die Faserstoffsuspension (S) oberhalb der unteren Hälfte der Stauhöhe (H) zugeführt wird.

6. Verfahren nach einem der voranstehenden Ansprüche,
**dadurch gekennzeichnet,**
**dass** die Faserstoffsuspension (S) gleichmäßig über mindestens 80 % des Strömungsquerschnittes verteilt in das Flotationsgefäß (4, 4') zugeführt wird.

7. Verfahren nach einem der voranstehenden Ansprüche,
**dadurch gekennzeichnet,**
**dass** mindestens zwei gleich große Flotationsgefäße (4, 4') verwendet werden, die sich an ihrer Längsseite (5) berühren, und dass sie parallel geschaltet sind.

8. Verfahren nach einem der voranstehenden Ansprüche,
**dadurch gekennzeichnet,**
**dass** eine Flotationsanlage verwendet wird, die überwiegend aus gleich großen Flotationsgefäßen (4, 4') besteht.

9. Verfahren nach Anspruch 7 oder 8,
**dadurch gekennzeichnet,**
**dass** die Flotationsgefäße (4, 4') an den berührenden Längsseiten (5) offen ausgeführt sind.

10. Verfahren nach einem der voranstehenden Ansprüche,
**dadurch gekennzeichnet,**
**dass** die zu flotierende Faserstoffsuspension (S) direkt in den aufsteigenden Flotationsschaum. (12) zugegeben wird.

11. Verfahren nach einem der voranstehenden Ansprüche,
**dadurch gekennzeichnet,**
**dass** die zu flotierende Faserstoffsuspension (S) unbelüftet zugegeben wird, und dass unterhalb der Zugabestelle eine Belüftung erfolgt.

12. Verfahren nach einem der Ansprüche 1 bis 10,
**dadurch gekennzeichnet,**
**dass** die zu flotierende Faserstoffsuspension (S) belüftet zugegeben wird, und dass unterhalb der Zugabestelle eine Teilbelüftung erfolgt.

13. Verfahren nach einem der voranstehenden Ansprüche,
**dadurch gekennzeichnet,**
**dass** die Höhe, bei der die Suspension in das Flotationsgefäß (4, 4') eingeführt wird, einstellbar ist.

14. Verfahren nach einem der voranstehenden Ansprüche,
**dadurch gekennzeichnet,**
**dass** die Menge der zugeführten Luft einstellbar ist.

15. Verfahren nach einem der voranstehenden Ansprüche,
**dadurch gekennzeichnet,**
**dass** ein Teilstrom (3') des Flotationsschaumes (3) in den Zulauf des Flotationsgefäßes (4, 4') zurückgeführt wird.

16. Verfahren nach Anspruch 15,
**dadurch gekennzeichnet,**
**dass** der Teilstrom (3') geregelt wird:

## Claims

1. Method for removing contaminants from an aqueous fibre pulp suspension (S), using an upright flotation vessel (4, 4') inside which the pulp suspension (S) is stacked up to an overflow level (H) above the base of the flotation vessel (4),
in which, with the aid of gas bubbles (1), a flow of bubbles (2) is formed that rises upwards within the stacked pulp suspension (S) against the gravitational field,
wherein the pulp suspension (S) is passed against the ascending direction of the bubble flow (2) through the latter, and is taken off in purified form in the form of accept (S'), and
wherein the contaminants become attached to the gas bubbles (1) and are then removed, together with the gas bubbles (1), in a compacted flotation foam (3),
**characterised in that**
the cross-section of flow of the flotation vessel (4, 4') that is at right angles to the bubble flow (2) is straight for up to at least 80 % on at least one long side (5), and **in that** the length (L) of the long side (5) is at least 1.5 times, preferably at least 2 times, the size of the width (B) of the widthways side (6).

2. Method as in claim 1,
**characterised in that**
the length (L) is at least 3 times as great as the width (B).

3. Method as in claim 1 or 2,
**characterised in that**
the cross-section of flow is essentially rectangular.

4. Method as in claim 1, 2 or 3,
**characterised in that**
the hydraulic diameter of the cross-section of flow is not greater than 2.7 m.

5. Method as in claim 1, 2, 3 or 4,
**characterised in that**
the pulp suspension (S) is fed in above the bottom half of the overflow level (H).

6. Method as in one of the preceding claims,
**characterised in that**
the pulp suspension (S) is fed into the flotation vessel (4, 4') evenly dispersed over at least 80 % of the cross-section of flow.

7. Method as in one of the preceding claims,
**characterised in that**
at least two flotation vessels (4, 4') of the same size are used which are in contact along their long sides (5), and **in that** they are connected in parallel.

8. Method as in one of the preceding claims,
**characterised in that**
a flotation installation is used which is made up predominantly of flotation vessels (4, 4') of the same size.

9. Method as in claim 7 or 8,
**characterised in that**
the flotation vessels (4, 4') are made so that they are open on the long sides (5) that are in contact.

10. Method as in one of the preceding claims,
**characterised in that**
the floated pulp suspension (S) is added directly into the ascending flotation foam (12).

11. Method as in one of the preceding claims,
**characterised in that**
the pulp suspension (S) that is to be floated is added without aeration, and that an aeration process is carried out underneath the inlet point.

12. Method as in one of claims 1 to 10,
**characterised in that**
the pulp suspension (S) that is to be floated is added in aerated form, and that a partial aeration process is carried out underneath the inlet point.

13. Method as in one of the preceding claims,
**characterised in that**
the level at which the suspension is introduced into the flotation vessel (4, 4') is adjustable.

14. Method as in one of the preceding claims,
**characterised in that**
the volume of air admitted is adjustable.

15. Method as in one of the preceding claims,
**characterised in that**
a part-flow (3') of the flotation foam (3) is passed back into the inlet of the flotation vessel (4, 4').

16. Method as in claim 15,
**characterised in that**
the part-flow (3') is regulated.

## Revendications

1. Procédé d'élimination d'impuretés présentes dans une suspension aqueuse de matières fibreuses (S), moyennant l'utilisation d'un récipient de flottation vertical (4, 4'), dans lequel la suspension de matières fibreuses (S) s'accumule sur une hauteur d'accumulation (H) au-dessus du fond du récipient de flottation (4),
dans lequel on forme, à l'aide de bulles de gaz (1), un courant de bulles (2) montant à l'encontre du champ de pesanteur dans la suspension de matières fibreuses accumulée (S),
la suspension de matières fibreuses (S) étant envoyée à travers le courant de bulles (2) à l'encontre du sens de montée de ce dernier et étant évacuée sous forme épurée en tant que pâte acceptée (S'), et
les impuretés se fixant aux bulles de gaz (1) puis étant évacuées, conjointement avec les bulles de gaz (1), dans une écume de flottation concentrée (3),
**caractérisé en ce que**
la section de passage du récipient de flottation (4, 4'), située transversalement au courant de bulles (2), est rectiligne à au moins 80 % sur au moins un côté longitudinal (5) et la longueur (L) du côté longitudinal (5) est au moins une fois et demie, de préférence au moins deux fois, plus grande que la largeur (B) du côté transversal (6).

2. Procédé selon la revendication 1,
**caractérisé en ce que**
la longueur (L) est au moins trois fois plus grande que la largeur (B).

3. Procédé selon la revendication 1 ou 2,
**caractérisé en ce que**
la section de passage est sensiblement rectangulaire.

4. Procédé selon la revendication 1, 2 ou 3,
**caractérisé en ce que**
le diamètre hydraulique de la section de passage n'est pas supérieur à 2,7 m.

5. Procédé selon la revendication 1, 2, 3 ou 4,
**caractérisé en ce que**
la suspension de matières fibreuses (S) est amenée au-dessus de la moitié inférieure de la hauteur d'accumulation (H).

6. Procédé selon l'une des revendications précédentes,
**caractérisé en ce que**
la suspension de matières fibreuses (S) est amenée de manière uniformément répartie dans le récipient de flottation (4, 4') sur au moins 80 % de la section de passage.

7. Procédé selon l'une des revendications précédentes,
**caractérisé en ce que**
l'on utilise au moins deux récipients de flottation de même taille (4, 4') qui se touchent par leur côté longitudinal (5), et sont montés en parallèle.

8. Procédé selon l'une des revendications précédentes,
**caractérisé en ce que**
l'on utilise une installation de flottation qui se compose essentiellement de récipients de flottation de même taille (4, 4').

9. Procédé selon la revendication 7 ou 8,
**caractérisé en ce que**
les récipients de flottation (4, 4') sont ouverts au niveau des côtés longitudinaux touchants (5).

10. Procédé selon l'une des revendications précédentes,
**caractérisé en ce que**
la suspension de matières fibreuses (S) à flotter est additionnée directement dans l'écume de flottation montante (12).

11. Procédé selon l'une des revendications précédentes,
**caractérisé en ce que**
la suspension de matières fibreuses (S) à flotter est additionnée sans être aérée, et une aération a lieu au-dessous du point d'addition.

12. Procédé selon l'une des revendications 1 à 10,
**caractérisé en ce que**
la suspension de matières fibreuses (S) à flotter est additionnée sous forme aérée, et une aération partielle a lieu au-dessous du point d'addition.

13. Procédé selon l'une des revendications précédentes,
**caractérisé en ce que**
la hauteur à laquelle la suspension est introduite dans le récipient de flottation (4, 4') est réglable.

14. Procédé selon l'une des revendications précédentes,
**caractérisé en ce que**
la quantité d'air amené est réglable.

15. Procédé selon l'une des revendications précédentes,
**caractérisé en ce que**
un courant partiel (3') de l'écume de flottation (3) est ramené dans l'arrivée du récipient de flottation (4, 4').

16. Procédé selon la revendication 15,
**caractérisé en ce que**
le courant partiel (3') est asservi.
